# EUROPEAN PATENT SPECIFICATION

(11) **EP 2 304 423 B1**
(45) Date of publication and mention of the grant of the patent: **20.02.2019**
(21) Application number: 09798747.3
(22) Date of filing: 16.07.2009
(51) Int. Cl.: G01N 30/02

(54) **DEVICES HAVING AN INERT SURFACE AND METHODS OF MAKING SAME**
VORRICHTUNG MIT EINER TRÄGEN OBERFLÄCHE UND VERFAHREN ZU IHRER HERSTELLUNG
DISPOSITIFS COMPORTANT UNE SURFACE INERTE ET LEURS PROCÉDÉS DE FABRICATION

(30) Priority: 18.07.2008 US 81848 P
(43) Date of publication of application: 06.04.2011
(73) Proprietor: Waters Technologies Corporation, Milford, MA 01757 (US)
(72) Inventor: BOUVIER, Edouard, S.P., Stow MA 01775 (US); JUNG, Moon, Chul, Marlborough MA 01752 (US)
(74) Representative: Barton, Matthew Thomas
(86) International application number: PCT/US2009/050845
(87) International publication number: WO 2010/009311

(56) References cited:
- JP-A- H10 206 407
- US-A- 5 322 913
- US-A1- 2008 090 988
- US-A1- 2008 145 276
- US-A1- 2008 159 916
- US-B1- 6 329 487
- US-B2- 6 652 978
- US-B2- 7 105 229

## Description

### Field of Invention

This invention relates to apparatus having a surface comprising one or more coatings that are relatively inert and methods for making such surfaces.

### Background of the Invention

Materials used to make fluid conduits, flow cells, pumps, valves, separation devices and the like in apparatus used for diagnostic and analytical are preferably inert. As used herein, the term inert means that the material in contact with the fluid carrying analytes does not add compounds to the fluid, does not absorb or adsorb compounds from the solution, and does not react with the compounds in the solution. Unfortunately, several of the base materials which are used to transport or contain or power fluids through these devices are not sufficiently inert. This problem becomes more acute as the scale of the conduits and subparts of the device are reduced in scale. The small scale of microfluidic devices has forced the use of materials as a base substrate that have desirable features from a manufacturing view but are less than ideal for fluid conveyance.

As used herein, the term "microfluidic" refers to channels, conduits, capillaries, tubings, pipes and the like of approximately 1 - 500 micrometer in diameter. As used herein, the term "analyte" refers to one or more compounds that it is desirable to detect or quantify. The term "solute" is used in a broad sense to denote a material in which a material is dissolved. Chromatography is a technology by which compounds in solution are separated. The compounds are separated by the unique affinity of a compound to a material that is in contact with the solute. Liquid chromatography uses liquid as a mobile phase. A stationary phase, such as a solid support, is used to adsorb the analyte. Chromatography methods often use dilute acidic and basic aqueous solutions, and water miscible solvents, such as acetonitrile and methanol. These solutions are often deleterious to the materials, which conduits, channels, tubings, pipes, solid support or components of the apparatus on which the chromatography is performed, are made of. Or, the materials, which conduits, channels, tubings, pipes or components of the apparatus on which the chromatography is performed, leach or absorb compounds into or from the solute.

There is a need for a coating technology to reproducibly and cost-effectively create a diffusion barrier within a microfluidic channel.

JP H10 206407 A relates to filler for liquid chromatography and a treatment method thereof. It teaches to coat the surface of silica gel used as a carrier in liquid chromatography with polysilazane that is a silicon nitride polymer. The silica gel is of 1-100 µ in a particle diameter and perhydroxypolysilazane is used as polysilazane having a molecular weight of approximately 600-2,100. Methylpolysilazane with a molecular weight of approximately 350-700 can be used as well. The coating is provided by silicon nitride polymer which is subjected to heat treatment resulting in an amorphous SiO₂ film or a SiC ceramic film, which film prevents the adsorption and non- elution of a basic compound.

US 2008/145276 A1 and US2008/159916 A1 relate to an amorphous non-glassy ceramic composition that is prepared by curing, calcining and/or pyrolyzing a precursor material comprising silicon, a Group III metal, a Group IVA metal, and/or a Group IVB metal.

### Summary of the Invention

The present invention features a device for performing liquid chromatogrphy devices having at least one wetted surface as defined by claim 1. Such liquid chromatography device comprises components, channel devices, conduits, flow cells, valves, pumps, supports, columns, and column fittings and frits made of or coated with a polysilazane and polysilazane-like materials. As used herein, the term silazane refers to a hydride of silicon and nitrogen. A preferred polysilazane or polysilazane-like material has the formula set forth below:

-[A]ₓ-[B]_{y}- Formula 1.

As used above, A represents 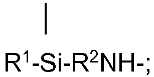 wherein R¹ and R² each independently represent hydrogen, alkyl, alkenyl, alkynyl, aromatic, amino alkyl, amino alkenyl, amino alkynyl, pyridinyl, pyrridonyl, and carbonyl, alcohol and carboxylic acid derivatives thereof having one to twenty five atoms, and hydroxyl, amino, amide, carboxyl, ester, carbonyl, sulfhydryl, sulfonyl, phosphoral, bromo, iodo, chloro and fluoro derivatives; the silane is covalently linked to the nitrogen and the vacant valence of the silane is to a further A or B or terminal hydrogen or hydroxyl group or alkyl, alkene or alkyne or trace co-reactants;

As used above, B represents 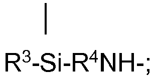 wherein R³ and R⁴ each independently represent hydrogen, alkyl, alkenyl, alkynyl, aromatic, amino alkyl, amino alkenyl, amino alkynyl, pyridinyl, pyrridonyl, and carbonyl, alcohol and carboxylic acid derivatives thereof having one to twenty five atoms, and hydroxyl, amino, amide, carboxyl, ester, carbonyl, sulfhydryl, sulfonyl, phosphoral, bromo, iodo, chloro and fluoro derivatives; the silane is covalently linked to the nitrogen and the vacant valence of the silane is to a further A or B or terminal hydrogen or hydroxyl group or alkyl, alkene, alkyne, or W or trace co-reactants. As used above, W is represented by the formula -R⁶-Si-R⁸ₐ⁻R⁷_{b}. R⁶ is as defined with respect to R¹ or R². R⁷ is hydrogen or C₁-C₆ straight, cyclic or branched alkyl group. R⁸ is Cl, Br, I, C₁-C₅ alkoxy, dialkylamino or trifiuoromethanesulfonate; a and b are each an integer from 0 to 3 provided that a+b=3.

A preferred alkoxy group for R⁸ is methoxy and a preferred alkyl for R⁷ is methyl. And, X and Y represent relative amounts of A or B as decimals that together add to 1.0.

As used herein, the term "independently represent" means that the chemical groups may be the same or different. And, to the extent the formula above may deviate from established silazane chemistry definitions, the formulas are controlling. This paper uses the term "polysilazane" to denote materials conforming to Formula 1 and such materials which after curing to form ceramic type materials may not hold true to the formulas of the starting materials, due to polymerization, thermal decomposition or rearrangement.

Preferrably, at least one of R¹ and R² is alkyl and at least one is alkenyl. And, preferrably, at least one of R³ and R⁴ is alkyl and at least one is hydrogen.

A preferred silazane is represented by the polysilazane formula set forth below:

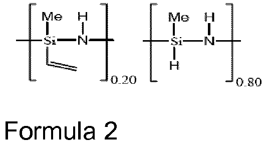

As used herein, the term "wetted surface" refers to a surface of a solid material exposed or in contact with aqueous or organic solutions.

Coatings, devices, components and apparatus made from compositions corresponding to Formula 1 are inert to typical chromatographic mobile phases, such as dilute acidic and basic aqueous solutions, and water miscible solvents, such as acetonitrile and methanol or have groups R¹, R², R³ and R⁴ selected for such inertness. Preferred materials and R¹, R², R³ and R⁴ groups, and coatings, devices, components and apparatus made thereof have non-porous wetted surfaces with low binding/low adsorption towards acidic, basic or hydrophobic analytes. Preferred materials and R¹, R², R³ and R⁴ groups, and coatings, devices, components and apparatus made thereof do not crack or shrink upon curing. Preferred materials and R¹, R², R³ and R⁴ groups, and coatings, devices, components and apparatus made thereof do not shrink or swell in typical chromatographic solvents. With respect to coatings of silazane based materials, the coatings have a thermal expansion coefficient similar to that of the bulk material that is being coated. Coatings, devices, components and apparatus are suitable for use at typical HPLC/UPLC operating temperatures and pressures of 103 MPa (15,000 psi).

These and other advantages and features will be apparent to those skilled in the art upon reading the detailed description and viewing the drawings that follow.

### Brief Description of the Drawings

Figure 1 depicts a column in partial cross section having a frit embodying features of the present invention;
Figure 2 depicts a frit having features of the present invention;
Figure 3 depicts a microfluidic device having features of the present invention; and,
Figure 4 depicts a microfluidic device having features of the present invention.

### Detailed Description of the Invention

Embodiments of the present invention in detail as liquid chromatogrphy devices has at least one wetted surface comprising a polysilazane as defined by claim 1. Those skilled in the art will recognise that embodiments of the present invention have utility and applications in other devices for which leaching of materials from the structures containing or transporting fluids is a potential problem.

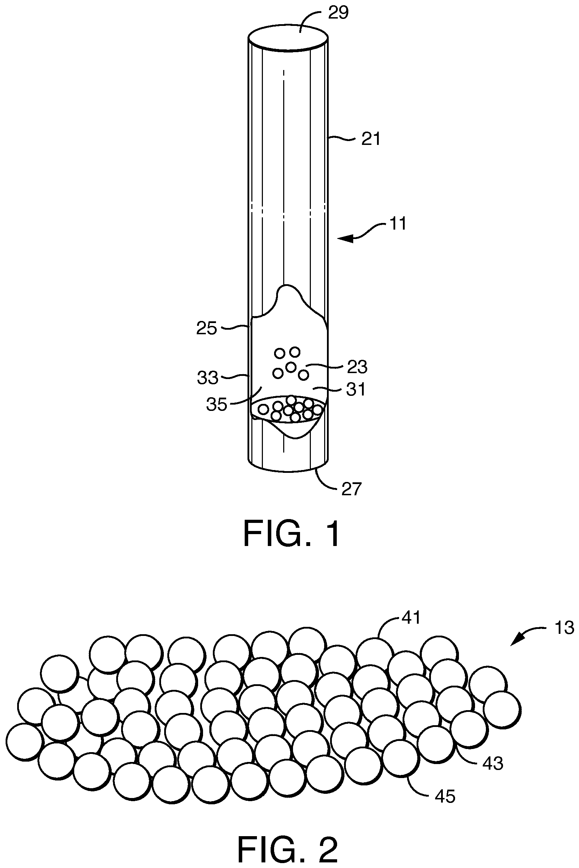

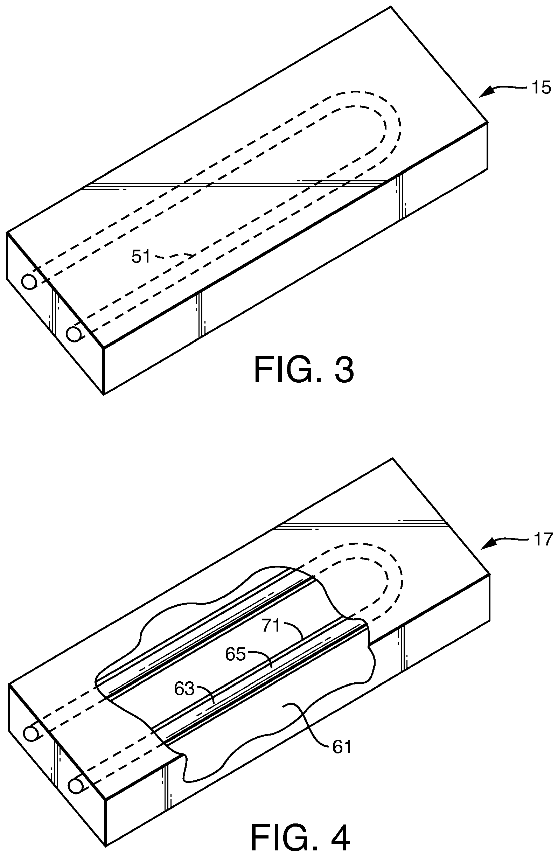

Figures 1-4 depict liquid chromatography devices or components thereof having features of the present invention. These figures depict a column, shown in figure 1, generally designated by the numeral 11; a frit, shown in figure 2, generally designated by the numeral 13; and microfluidic devices, generally designated by the numerals 15 and 17, depicted in figures 3 and 4.

Turning first to figure 1, the column 11 in simplified form in partial cut-away. The column, as depicted has a housing 21, media 23, and a frit 13. Housing 21 is a cylindrical tube formed of at least one wall 25 and having a first end 27, a second end 29. Housing 21 may comprise cross-sectional shapes other than a circle, for example, rectangles, octagonal, and the like; however, such shapes are less conventional. The wall 25 has an interior surface 31 and an exterior surface 33.

The interior surface 31 of wall 25 defines a chamber 35 for containing the media 23. The media 23 is a packed bed of particles, fibers, or a monolith structure.

The first end 27 and second end 29 are generally similar in features. This paper will describe only the first end 27 as such details relate to the invention. The column 11 would normally comprise fittings for attachment to other conduits which have been omitted from the drawings for simplification.

At least one of the housing 21, frit 13, media 23 or other components of the column or chromatography systems in general [not shown] are made of or have a coating of a polysilazane or polysilazane-like material. For example, without limitation, pump components and valves may be made of or be coated with a polysilazane or polysilazane-like material.

Figure 2 depicts frit 13 made with a polysilazane or polysilazane-like material, wherein the latter forms not part of the present invention. The frit 13 is a plug 41 of particles having interstitial spaces 43 through which fluids flow. Turning now to figures 1 and 2, the interstitial spaces 43 extend through the plug 41 to allow the flow of fluid through the frit 13 while substantially retaining the media 23 which is contained in the chamber 35.

As depicted in in figure 2, the particles have a underlying substrate 45, for example, without limitation , silica, or metal oxides. The particles bear a coating of a polysilazane or polysilazane-like material. This coating forms about the particles to form a plug of co-adhering particles. Those skilled in the art will readily appreciate that the particles described can be readily substituted with other forms such as fibers and the like.

Turning now to Figure 3, a microfluidic device 15 is depicted having a channel 51 for conveying fluids in a chromatography instrument [not shown]. The channel 51 may further comprise detection sections [not shown], separation sections for performing chromatography [not shown], pumps [not shown], valves [not shown], connection sections [not shown] or any other component used in diagnostic or analytical equipment.

The microfluidic device 15 is comprised of, or is made from, a polysilazane material. The material obviates problems associated with microfluidic devices made of materials which are not entirely inert.

In the alternative, turning now to figure 4, a microfluidic device 17 of similar design as the microfluidic device 15 of figure 3, is depicted. The microfluidic device 17 has a device substrate 61. However, some ceramic compositions are not stable at all hydrogen ion concentrations and solvents. For example, some Low Temperature Co-fired Ceramic (LTCC) materials, such as Dupont 951, are not fully inert. Dupont 951 has a composition of: 48 wt% Al₂O₃, 31% SiO₂, 0.03% TiO₂, 1.99% B₂O₃, 0.03% BaO, 4.48% CaO, 0.86% K₂O, 11.3% PbO. This material has excellent mechanical strength, and it is relatively easy to manufacture reproducibly. However, the material can adsorb various analytes and affect the chromatographic separation. Acidic mobile phases that are commonly employed in liquid chromatography are known to solubilize some of the heavy metals from the LTCC materials.

A preferred substrate 61 is a ceramic such as LTCC materials.

The microfluidic device 17 is depicted having a channel 63 for conveying fluids in a chromatography instrument [not shown]. The channel 63 may further comprise detection sections [not shown], separation sections for performing chromatography [not shown], pumps [not shown], valves [not shown], connection sections [not shown] or any other component used in diagnostic or analytical equipment.

The microfluidic device 17 has a layer 65 comprised of a polysilazane or a polysilazane-like material, wherein the latter forms not part of the present invention. Preferably, the layer 65 is a cured polysilazane material. The layer 65 has at least one wetted surface 71 which is in direct contact with the fluids which flow through the device 17 by channel 63. The layer 65 seals the substrate 61 of microfluidic device 17 preventing the adsorption or absorption of analytes and preventing the leaching of metals into solutions flowing through channel 63.

A silazane refers to a hydride of silicon and nitrogen. Thus, a polysilazane is a polymer of such a hydride of silicon and nitrogen. A preferred polysilazane has the formula of Formula 1 set forth below:

-[A]ₓ-[B]_{y}- Formula 1

As used above, A represents

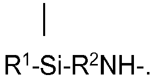

Wherein R¹ and R² independently represents alkyl, alkenyl, alkynyl, aromatic, amino alkyl, amino alkenyl, amino alkynyl, pyridinyl, pyrridonyl, and carbonyl, alcohol and carboxylic acid derivatives thereof having one to twenty five atoms, and hydroxyl, amino, amide, carboxyl, ester, carbonyl, sulfhydryl, sulfonyl, phosphoral, bromo, iodo, chloro and fluoro derivatives; the silane is covalently linked to the nitrogen and the vacant valence of the silane is to a further A or B or terminal hydrogen or hydroxyl group or alkyl, or trace co-reactants.

As used above, B represents

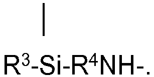

Wherein R³ and R⁴ independently represents hydrogen, alkyl, alkenyl, alkynyl, aromatic, amino alkyl, amino alkenyl, amino alkynyl, pyridinyl, pyrridonyl, and carbonyl, alcohol and carboxylic acid derivatives thereof having one to twenty five atoms, and hydroxyl, amino, amide, carboxyl, ester, carbonyl, sulfhydryl, sulfonyl, phosphoral, bromo, iodo, chloro and fluoro derivatives; the silane is covalently linked to the nitrogen and the vacant valence of the silane is to a further A or B or terminal hydrogen or hydroxyl group or alkyl, alkene or alkyne or trace co-reactants. As used above, W is represented by the formula -R⁶-Si-R⁸ₐ⁻R⁷_{b}. R⁶ is as defined with respect to R¹ or R². R⁷ is hydrogen or C₁-C₆ straight, cyclic or branched alkyl group. R⁸ is Cl, Br, I, C₁-C₅ alkoxy, dialkylamino or trifiuoromethanesulfonate; a and b are each an integer from 0 to 3 provided that a+b=3. A preferred alkoxy group for R⁸ is methoxy and a preferred alkyl for R⁷ is methyl. And, X and Y represent relative amounts of A or B as decimals that together add to 1.0.

A preferred silazane is represented by the polysilazane formula set forth below:

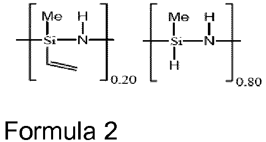

US Patents 6,329,487 and 6,652,978 both granted to Kion Corporation, disclose polysilazanes corresponding to Formula 1. These materials are sold under the trademark Kion Ceraset® Polysilazane 20 and G Shield™. Ceraset® Polysilazane 20 is described as a low viscosity liquid polymer that cures by heating to 180-200C, or at lower temperatures by addition of a free radical initiator. G Shield™ is described as a solution of liquid polysilazane polymer curable by moisture at a relatively low temperature.

Coatings, devices, components and apparatus made materials conforming generally to Formula 1 have R¹, R², R³ and R⁴ groups selected to be substantially inert. For example, materials conforming generally to Formula 2, such as cured ceramics formed of such materials, are inert to typical chromatographic mobile phases, such as dilute acidic and basic aqueous solutions, and water miscible solvents, such as acetonitrile and methanol. Coatings, devices, components and apparatus made materials conforming generally to Formula 1 have R¹, R², R³ and R⁴ groups selected to exhibit non-porous wetted surfaces with low binding/low adsorption towards acidic, basic or hydrophobic analytes. Coatings, devices, components and apparatus made materials conforming generally to Formula 1 have R¹, R², R³ and R⁴ groups selected to exhibit resistance to cracking or shrinking upon curing. For example, without limitation, materials formed with Formula 2 do not shrink or swell in typical chromatographic solvents. With respect to coatings of silazane based materials, the coatings preferrably have a thermal expansion coefficient similar to that of the bulk material that is being coated. Coatings, devices, components and apparatus are suitable for use at typical HPLC/UPLC operating temperatures and pressures of 15,000 psi.

Polysilazanes undergo thermal polymerization in three distinct phases. At temperatures up to 400C, curing occurs, which is cross-linking primarily via bond rearrangement. Little change in density occurs during this stage. Between 400-800C, mineralization occurs, in which hydrocarbons and hydrogen gas are evolved, mainly due to the breaking of Si-C and N-C bonds. The final stage, crystallization, occurs at temperatures above 800C. In this stage, the primary change is the decrease in the H/Si ratio due to evolution of hydrogen gas. The latter two stages are accompanied by densification.

The method of making the devices of the present invention is exemplified in the following Examples.

### Example #1: Channel coating:

This example describes the making of a microfluidic device 17, depicted in figure 4 having a channel 63. The device has a LTCC substrate 61. The channel 63 will be coated with a layer 65 of a polysilazane to create a wetted surface 71.

Channel 63 is coated filling the channel with liquid silazane hydrostatically, either by vacuum or pressure, followed by air or appropriate immiscible liquid. If a thinner film is desired, the solution can be first diluted with an appropriate solvent. Addition of a peroxide such as an organic peroxide can be used to reduce the curing temperature. Solvent can be driven off by initially heating to a temperature below the cure temperature. Curing can be achieved by increasing the temperature further to temperatures up to ∼200C. An inert atmosphere may be preferred. In some instances, greater mechanical strength of the coating may be required. This can be achieved by addition of a filler material such as particles or fibers. The filler material may contain reactive groups on the surface that can polymerize with the pre-ceramic. Fillers may also be utilized to improve adhesion properties if the thermal expansion coefficient of the polysilazane differs substantially different from the LTCC material.

The channel 63 having a layer 65 would be utilized as conduits or as regions where chromatographic sorbents would be filled and used as either trap columns or analytical columns. Or, in the alternative, the layer 65 would be placed on microfluidic sections used in detection, valve or fluid control, connections, and othe components.

### Example #2: Chromatographic frit fabrication.

This example describes the fabrication of a frit by bonding particles held in a column or device. A channel of a microfluidic device is abutted to a porous frit, then packed with chromatographic particles hydrostatically using a slurry of packing media. Subsequently, the chip is disconnected from the frit, and a small amount of a polysilazane monomer solution is applied to the packed bed, in the manner of sodium silicate or PDMS solution and then cured.

Use of a polysilazane dissolved in a solvent and curing is more reproducible to form a frit fabrication process. If an appropriately low boiling point solvent is used, then as the solvent evaporates, it will prevent the silazane from polymerizing within the interstitial channels of the packed bed. This will thus prevent blockage of the microfluidic channel, and enable high bed permeabilities and more reproducible fabrication.

### Example 3, Microfluidic Device Fabrication

A microfluidic device such as a chip is made by creating a mold of the device and filling the mold with a monomer solution of silazanes and curing the silazane monomers to form a polysilazane substrate. A peroxide such as an organic peroxide can be used to reduce the curing temperature. Solvent can be driven off by initially heating to a temperature below the cure temperature. Curing can be achieved by increasing the temperature further to temperatures up to ∼200C. In some instances, greater mechanical strength of the coating may be required. This can be achieved by addition of a filler material such as particles or fibers. The filler material may contain reactive groups on the surface that can polymerize with the pre-ceramic.

The chips can be injection molded to the cured state. In this state, the pre-ceramic chips can be machined, laser cut, etc. Any electrical connections can be added to the pre-ceramic state chip. Two separate halves of the chip may be fabricated. The halves are then require aligned, and fired under pressure to fuse the halves together. A solution of liquid silazane may be utilized to improve bond strength. Microfluidic channel integrity may need to be maintained by addition of a sacrificial material that can be subsequently removed via solvent, heat, or other means. Bringing the material to the ceramic state (heating above 1200C) may be useful to further increase bond strength. Fillers may be used in the chip fabrication to further enhance mechanical strength. Alternatively, the ceramic may be housed within a hardened shell for further improvement in mechanical strength.

## Claims

1. A device for performing liquid chromatography having at least one wetted surface having a composition of a polysilazane, wherein the wetted surface is part of a frit comprising a plug of particles coated with cured polysilazane, wherein the cured polysilazane is crosslinked but not mineralized or crystallized.

2. The device of claim 1, wherein said wetted surface is a layer of said composition.

3. The device of claim 1, wherein said device is made of said composition.

4. The device of claim 1, wherein said polysilazane has the formula set forth below:
-[A]ₓ-[B]_{y}- Formula 1;
as used above, A represents 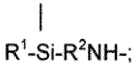 wherein R¹ and R² each independently represent hydrogen, alkyl, alkenyl, alkynyl, aromatic, amino alkyl, amino alkenyl, amino alkynyl, pyridinyl, pyrridonyl, and carbonyl, alcohol and carboxylic acid derivatives thereof having one to twenty five atoms, and hydroxyl, amino, amide, carboxyl, ester, carbonyl, sulfhydryl, sulfonyl, phosphoral, bromo, iodo, chloro and fluoro derivatives; the silane is covalently linked to the nitrogen and the vacant valence of the silane is to a further A or B or terminal hydrogen or hydroxyl group or alkyl, alkene or alkyne or trace co-reactants; as used above, B represents 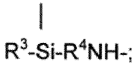 wherein R³ and R⁴ each independently represent hydrogen, alkyl, alkenyl, alkynyl, aromatic, amino alkyl, amino alkenyl, amino alkynyl, pyridinyl, pyrridonyl, and carbonyl, alcohol and carboxylic acid derivatives thereof having one to twenty five atoms, and hydroxyl, amino, amide, carboxyl, ester, carbonyl, sulfhydryl, sulfonyl, phosphoral, bromo, iodo, chloro and fluoro derivatives; the silane is covalently linked to the nitrogen and the vacant valence of the silane is to a further A or B or terminal hydrogen or hydroxyl group or alkyl, alkene, or alkyne, W or trace co-reactants wherein W is represented by the formula -R⁶-Si-R⁸ₐ⁻R⁷_{b}; R⁶ is as defined with respect to R¹ or R²; R⁷ is hydrogen C₁-C₆ straight, cyclic or branched alkyl group; R⁸ is Cl, Br, I, C₁-C₅ alkoxy, dialkylamino or trifiuoromethanesulfonate; a and b are each an integer from 0 to 3 provided that a+b=3; and, R⁸ is alkyl or hydrogen; and, X and Y represent relative amounts of A or B as decimals that together add to 1.0.

5. The device of claim 1 wherein said polysilazane has a formula set forth below:

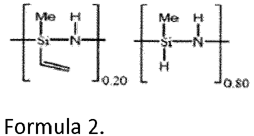

6. A method of making a device for performing liquid chromatography having at least one wetted surface, wherein said wetted surface is part of a frit, said method comprising:
forming said frit by coating particles with a composition of a polysilazane; and
curing said coated particles at a temperature up to 200°C.

7. The method of claim 6, wherein said polysilazane has the formula set forth below:
-[A]ₓ-[B]_{y}- Formula 1;
as used above, A represents 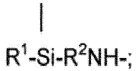 wherein R¹ and R² each independently represent hydrogen, alkyl, alkenyl, alkynyl, aromatic, amino alkyl, amino alkenyl, amino alkynyl, pyridinyl, pyrridonyl, and carbonyl, alcohol and carboxylic acid derivatives thereof having one to twenty five atoms, and hydroxyl, amino, amide, carboxyl, ester, carbonyl, sulfhydryl, sulfonyl, phosphoral, bromo, iodo, chloro and fluoro derivatives; the silane is covalently linked to the nitrogen and the vacant valence of the silane is to a further A or B or terminal hydrogen or hydroxyl group or alkyl, alkene or alkyne or trace co-reactants; as used above, B represents 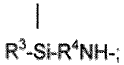 wherein R³ and R⁴ each independently represent hydrogen, alkyl, alkenyl, alkynyl, aromatic, amino alkyl, amino alkenyl, amino alkynyl, pyridinyl, pyrridonyl, and carbonyl, alcohol and carboxylic acid derivatives thereof having one to twenty five atoms, and hydroxyl, amino, amide, carboxyl, ester, carbonyl, sulfhydryl, sulfonyl, phosphoral, bromo, iodo, chloro and fluoro derivatives; the silane is covalently linked to the nitrogen and the vacant valence of the silane is to a further A or B or terminal hydrogen or hydroxyl group or alkyl, alkene or alkyne, or W, or trace co-reactants wherein W is represented by the formula -R⁶-Si-R⁸ₐ⁻R⁷_{b}; R⁶ is as defined with respect to R¹ or R²; R⁷ is hydrogen C₁-C₆ straight, cyclic or branched alkyl group; R⁸ is Cl, Br, I, C₁-C₅ alkoxy, dialkylamino or trifiuoromethanesulfonate; a and b are each an integer from 0 to 3 provided that a+b=3; and, R⁸ is alkyl or hydrogen; and, X and Y represent relative amounts of A or B as decimals that together add to 1.0.

8. The method of claim 6, wherein said polysilazane has a formula set forth below:

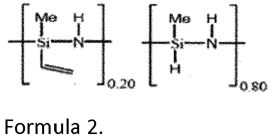

## Patentansprüche

1. Vorrichtung zum Durchführen einer Flüssigkeitschromatographie mit zumindest einer benetzten Oberfläche mit einer Zusammensetzung aus einem Polysilan, wobei die benetzte Oberfläche Teil einer Fritte ist, die einen Stopfen von Partikeln umfasst, die mit gehärtetem Polysilazan beschichtet sind, wobei das gehärtete Polysilazan vernetzt, aber nicht mineralisiert oder kristallisiert ist.

2. Vorrichtung nach Anspruch 1, wobei die benetzte Oberfläche eine Schicht aus der Zusammensetzung ist.

3. Vorrichtung nach Anspruch 1, wobei die Vorrichtung aus der Zusammensetzung hergestellt ist.

4. Vorrichtung nach Anspruch 1, wobei das Polysilazan die nachstehend angeführte Formel aufweist:
-[A]ₓ-[B]_{y}- Formel 1;
wie oben verwendet, A 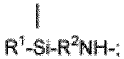 darstellt, wobei R¹ und R² jeweils unabhängig Wasserstoff, Alkyl, Alkenyl, Alkynyl, Aromat, Aminoalkyl, Aminoalkenyl, Aminoalkynyl, Pyridinyl, Pyrridonyl und Carbonyl, Alkohol- und Carbonsäurederivate davon mit 1 bis 25 Atomen und Hydroxyl-, Amino-, Amid-, Carboxyl-, Ester-, Carbonyl-, Sulfhydryl-, Sulfonyl-, Phosphoral-, Brom-, Iod-, Chlor- und Fluorderivate darstellen; das Silan mit dem Stickstoff kovalent verknüpft ist und die freie Valenz des Silans mit einem/r weiteren A oder B oder terminalen Wasserstoff- oder Hydroxylgruppe oder Alkyl, Alken oder Alkyn oder Spurencoreaktionspartnern kovalent verknüpft ist; wie oben beschrieben, B 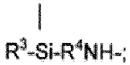 darstellt, wobei R³ und R⁴ jeweils unabhängig Wasserstoff, Alkyl, Alkenyl, Alkynyl, Aromat, Aminoalkyl, Aminoalkenyl, Aminoalkynyl, Pyridinyl, Pyrridonyl und Carbonyl, Alkohol- und Carbonsäurederivate davon mit 1 bis 25 Atomen und Hydroxyl-, Amino-, Amid-, Carboxyl-, Ester-, Carbonyl-, Sulfhydryl-, Sulfonyl-, Phosphoral-, Brom-, Iod-, Chlor- und Fluorderivate darstellen; das Silan mit dem Stickstoff kovalent verknüpft ist und die freie Valenz des Silans mit einem/r weiteren A oder B oder terminalen Wasserstoff- oder Hydroxylgruppe oder Alkyl, Alken oder Alkyn, W oder Spurencoreaktionspartnern kovalent verknüpft ist, wobei W durch die Formel -R⁶-Si-R⁸ₐ⁻R⁷_{b} dargestellt ist; R⁶ wie in Bezug auf R¹ oder R² definiert ist; R⁷ eine gerade, cyclische oder verzweigte Wasserstoff-C₁-C₆-Alkylgruppe ist; R⁸ Cl, Br, I, C₁-C₅-Alkoxy, Dialkylamino oder Trifluormethansulfonat ist; a und b jeweils eine ganze Zahl von 0 bis 3 sind, mit der Maßgabe, dass a + b = 3; und R⁸ Alkyl oder Wasserstoff ist; und X und Y relative Mengen von A oder B als Dezimalen sind, die gemeinsam auf 1,0 ergänzen.

5. Vorrichtung nach Anspruch 1, wobei das Polysilazan eine nachstehend angeführte Formel aufweist:

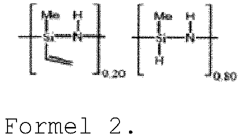

6. Verfahren zum Herstellen einer Vorrichtung zum Durchführen einer Flüssigkeitschromatographie mit zumindest einer benetzten Oberfläche, wobei die benetzte Oberfläche Teil einer Fritte ist, wobei das Verfahren umfasst:
Bilden der Fritte durch Beschichten von Partikeln mit einer Zusammensetzung aus einem Polysilazan; und
Härten der beschichteten Partikel bei einer Temperatur von bis zu 200 °C.

7. Verfahren nach Anspruch 6, wobei das Polysilazan die nachstehend angeführte Formel aufweist:
-[A]ₓ-[B]_{y}- Formel 1;
wie oben verwendet, A 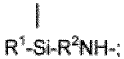 darstellt, wobei R¹ und R² jeweils unabhängig Wasserstoff, Alkyl, Alkenyl, Alkynyl, Aromat, Aminoalkyl, Aminoalkenyl, Aminoalkynyl, Pyridinyl, Pyrridonyl und Carbonyl, Alkohol- und Carbonsäurederivate davon mit 1 bis 25 Atomen und Hydroxyl-, Amino-, Amid-, Carboxyl-, Ester-, Carbonyl-, Sulfhydryl-, Sulfonyl-, Phosphoral-, Brom-, Iod-, Chlor- und Fluorderivate darstellen; das Silan mit dem Stickstoff kovalent verknüpft ist und die freie Valenz des Silans mit einem/r weiteren A oder B oder terminalen Wasserstoff- oder Hydroxylgruppe oder Alkyl, Alken oder Alkyn oder Spurencoreaktionspartnern kovalent verknüpft ist; wie oben beschrieben, B 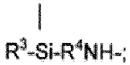 darstellt, wobei R³ und R⁴ jeweils unabhängig Wasserstoff, Alkyl, Alkenyl, Alkynyl, Aromat, Aminoalkyl, Aminoalkenyl, Aminoalkynyl, Pyridinyl, Pyrridonyl und Carbonyl, Alkohol- und Carbonsäurederivate davon mit 1 bis 25 Atomen und Hydroxyl-, Amino-, Amid-, Carboxyl-, Ester-, Carbonyl-, Sulfhydryl-, Sulfonyl-, Phosphoral-, Brom-, Iod-, Chlor- und Fluorderivate darstellen; das Silan mit dem Stickstoff kovalent verknüpft ist und die freie Valenz des Silans mit einem/r weiteren A oder B oder terminalen Wasserstoff- oder Hydroxylgruppe oder Alkyl, Alken oder Alkyn oder W oder Spurencoreaktionspartnern kovalent verknüpft ist, wobei W durch die Formel -R⁶-Si-R⁸ₐ⁻R⁷_{b} dargestellt ist; R⁶ wie in Bezug auf R¹ oder R² definiert ist; R⁷ eine gerade, cyclische oder verzweigte Wasserstoff-C₁-C₆-Alkylgruppe ist; R⁸ Cl, Br, I, C₁-C₅-Alkoxy, Dialkylamino oder Trifluormethansulfonat ist; a und b jeweils eine ganze Zahl von 0 bis 3 sind, mit der Maßgabe, dass a + b = 3; und R⁸ Alkyl oder Wasserstoff ist; und X und Y relative Mengen von A oder B als Dezimalen sind, die gemeinsam auf 1,0 ergänzen.

8. Verfahren nach Anspruch 6, wobei das Polysilazan einer nachstehend angeführte Formel aufweist:

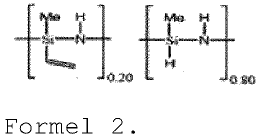

## Revendications

1. Dispositif pour effectuer une chromatographie en phase liquide ayant au moins une surface mouillée ayant une composition d'un polysilazane, dans lequel la surface mouillée fait partie d'une fritte comprenant un bouchon de particules enrobées par du polysilazane durci, le polysilazane durci étant réticulé mais non minéralisé ou cristallisé.

2. Dispositif selon la revendication 1, dans lequel ladite surface mouillée est une couche de ladite composition.

3. Dispositif selon la revendication 1, dans lequel ledit dispositif est fait de ladite composition.

4. Dispositif selon la revendication 1, dans lequel ledit polysilazane a la formule énoncée ci-après :
-[A]ₓ-[B]_{y}- Formule 1 ;
tel qu'utilisé ci-dessus, A représente : 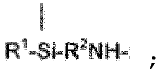 où R¹ et R² représentent chacun indépendamment hydrogène, alkyle, alcényle, alcynyle, aromatique, amino alkyle, amino alcényle, amino alcynyle, pyridinyle, pyrridonyle et carbonyle, les dérivés alcools et acides carboxyliques de ceux-ci ayant un à vingt-cinq atomes, et les dérivés hydroxyle, amino, amide, carboxyle, ester, carbonyle, sulfhydryle, sulfonyle, phosphoral, bromo, iodo, chloro et fluoro ; le silane est lié de façon covalente à l'azote et la valence vacante du silane est sur un autre A ou B ou hydrogène terminal ou groupe hydroxyle ou alkyle, alcène ou alcyne ou co-réactifs sous forme de traces ; tel qu'utilisé ci-dessus, B représente : 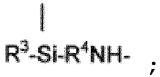 où R³ et R⁴ représentent chacun indépendamment hydrogène, alkyle, alcényle, alcynyle, aromatique, amino alkyle, amino alcényle, amino alcynyle, pyridinyle, pyrridonyle et carbonyle, les dérivés alcools et acides carboxyliques de ceux-ci ayant un à vingt-cinq atomes, et les dérivés hydroxyle, amino, amide, carboxyle, ester, carbonyle, sulfhydryle, sulfonyle, phosphoral, bromo, iodo, chloro et fluoro ; le silane est lié de façon covalente à l'azote et la valence vacante du silane est sur un autre A ou B ou hydrogène terminal ou groupe hydroxyle ou alkyle, alcène ou alcyne, W ou co-réactifs sous forme de traces, W étant représenté par la formule -R⁶-Si-R⁸ₐ⁻R⁷_{b} ; R⁶ est tel que défini en ce qui concerne R¹ ou R² ; R⁷ représente hydrogène, un groupe alkyle à chaîne droite, cyclique ou ramifié en C₁-C₆ ; R⁸ représente Cl, Br, I, alcoxy en C₁-C₅, dialkylamino ou trifluorométhanesulfonate ; a et b sont chacun un entier de 0 à 3, à la condition que a + b = 3 ; et R⁸ représente alkyle ou hydrogène ; et X et Y représentent des quantités relatives de A ou B en tant que décimales qui s'additionnent pour donner 1,0.

5. Dispositif selon la revendication 1, dans lequel ledit polysilazane a une formule énoncée ci-après :

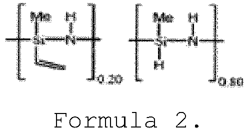

6. Procédé de fabrication d'un dispositif pour effectuer une chromatographie en phase liquide ayant au moins une surface mouillée, dans lequel ladite surface mouillée fait partie d'une fritte, ledit procédé comprenant :
- former ladite fritte par enrobage de particules par une composition d'un polysilazane ; et
- faire durcir lesdites particules enrobées à une température allant jusqu'à 200°C.

7. Procédé selon la revendication 6, dans lequel ledit polysilazane a la formule énoncée ci-après :
-[A]ₓ-[B]_{y}- Formule 1 ;
tel qu'utilisé ci-dessus, A représente : 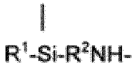 où R³ et R⁴ représentent chacun indépendamment hydrogène, alkyle, alcényle, alcynyle, aromatique, amino alkyle, amino alcényle, amino alcynyle, pyridinyle, pyrridonyle et carbonyle, les dérivés alcools et acides carboxyliques de ceux-ci ayant un à vingt-cinq atomes, et les dérivés hydroxyle, amino, amide, carboxyle, ester, carbonyle, sulfhydryle, sulfonyle, phosphoral, bromo, iodo, chloro et fluoro ; le silane est lié de façon covalente à l'azote et la valence vacante du silane est sur un autre A ou B ou hydrogène terminal ou groupe hydroxyle ou alkyle, alcène ou alcyne ou co-réactifs sous forme de traces ; tel qu'utilisé ci-dessus, B représente : 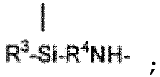 où R³ et R⁴ représentent chacun indépendamment hydrogène, alkyle, alcényle, alcynyle, aromatique, amino alkyle, amino alcényle, amino alcynyle, pyridinyle, pyrridonyle et carbonyle, les dérivés alcools et acides carboxyliques de ceux-ci ayant un à vingt-cinq atomes, et les dérivés hydroxyle, amino, amide, carboxyle, ester, carbonyle, sulfhydryle, sulfonyle, phosphoral, bromo, iodo, chloro et fluoro ; le silane est lié de façon covalente à l'azote et la valence vacante du silane est sur un autre A ou B ou hydrogène terminal ou groupe hydroxyle ou alkyle, alcène ou alcyne, ou W ou co-réactifs sous forme de traces, W étant représenté par la formule -R⁶-Si-R⁸ₐ⁻R⁷_{b} ; R⁶ est tel que défini en ce qui concerne R¹ ou R² ; R⁷ représente hydrogène, un groupe alkyle à chaîne droite, cyclique ou ramifié en C₁-C₆ ; R⁸ représente Cl, Br, I, alcoxy en C₁-C₅, dialkylamino ou trifluorométhanesulfonate ; a et b sont chacun un entier de 0 à 3 à la condition que a + b = 3 ; et R⁸ représente alkyle ou hydrogène ; et X et Y représentent des quantités relatives de A ou B en tant que décimales qui s'additionnent pour donner 1,0.

8. Procédé selon la revendication 6, dans lequel ledit polysilazane a la formule énoncée ci-après :
